# EUROPEAN PATENT APPLICATION

(11) **EP 1 518 779 A2**
(43) Date of publication of application: **30.03.2005**
(21) Application number: 04023062.5
(22) Date of filing: 28.09.2004
(51) Int. Cl.: B62D 17/00, B60G 7/02

(54) **Alignment control device**

(30) Priority: 29.09.2003 JP 2003338334
(71) Applicant: Aisin Seiki Kabushiki Kaisha, Kariya-shi, Aichi-ken 448-8650 (JP)
(72) Inventor: Inayoshi, Hidetoshi Aisin Seiki Kabushiki Kaisha, Kariya-shi Aichi-ken 448-8650 (JP); Oshita, Morito Aisin Seiki Kabushiki Kaisha, Kariya-shi Aichi-ken 448-8650 (JP)
(74) Representative: Leson, Thomas Johannes Alois, Dipl.-Ing.

(57) **Abstract**

An alignment control device includes an actuator, a wheel side member rotatably supporting a wheel, and a vehicle body side member supporting a vehicle body. The alignment control device includes an operational mechanism operated by the actuator and an eccentric camshaft member connecting the operational mechanism relative to a connection member for connecting the vehicle wheel side member and the vehicle body side member.

## Description

### FIELD OF THE INVENTION

The present invention relates to an alignment control device. More particularly, the present invention pertains to an alignment control device provided relative to a suspension for vehicle for controlling vehicle alignment.

### BACKGROUND

A known alignment control device is described in U.S.5,472,225 B2. The known alignment control device described in U.S.5,472,225 B2 includes a hydraulic pressure cylinder serving as an actuator provided at a middle portion of a suspension arm provided between a knuckle rotatably supporting a wheel and a sub frame at a vehicle side. With the construction of the known alignment control device described in U.S.5,472,225 B2, the alignment is controlled by changing a toe angle and a camber angle by changing arm length by the expansion and the contraction of the hydraulic pressure cylinder.

Notwithstanding, with the construction of the known alignment control device, the actuator is directly connected to the wheel side. Thus in case the external force (e.g., external force applied to inward direction of vehicle width) is applied to the wheel, the external force is directly transmitted to the actuator via the wheel. Accordingly, the actuator is likely to be affected by the external force.

A need thus exists for an alignment control device including an actuator for controlling vehicle alignment, which restrains the influence of the external force applied to the wheel to the actuator.

### SUMMARY OF THE INVENTION

In light of the foregoing, an alignment control device which includes an actuator, a wheel side member rotatably supporting a wheel, and a vehicle body side member supporting a vehicle body. The alignment control device includes an operational mechanism operated by the actuator and an eccentric camshaft member connecting the operational mechanism relative to a connection member for connecting the vehicle wheel side member and the vehicle body side member.

According to the present invention, the alignment control device includes the eccentric camshaft member. The eccentric camshaft member includes the first shaft and the second shaft which are eccentric from each other. The first shaft is connected to the wheel side member and the second shaft is connected to an intermediate member for connecting the wheel side member and the vehicle body side member. In this case, upon the operation of the operational mechanism in accordance with the actuation of the actuator, for example, the first shaft rotated in the axially peripheral direction to operate the eccentric camshaft member, thus to vary the distance between the wheel side member and the intermediate member. Accordingly, the alignment can be controlled by varying the toe angle, the camber angle, and the caster angle, or the like, of the wheel.

In case the external force is applied to the wheel, the external force is transmitted to the wheel side member to be applied to the connection portion (i.e., the eccentric camshaft member) between the wheel side member and the intermediate member. With the construction of the present invention, the actuator is operatively connected to the eccentric camshaft member via the operational mechanisms for rotating the first shaft and the second shaft. In other words, the eccentric camshaft member for converting the external force in the direction for rotating either the first shaft or the second shaft is provided between the actuator and the wheel. Because the external force is unlikely converted into the direction for rotating the first shaft or the second shaft at the eccentric camshaft member, the external force is unlikely transmitted to the actuator. Accordingly, the influence of the external force applied to the wheel to the actuator is restrained, and thus the damage by the external force is unlikely generated.

### BRIEF DESCRIPTION OF THE DRAWINGS

The foregoing and additional features and characteristics of the present invention will become more apparent from the following detailed description considered with reference to the accompanying drawings, wherein:

Fig. 1 is an overview showing a portion of a vehicle suspension device including an alignment control device according to an embodiment of the present invention.

Fig. 2 is a lateral cross-sectional view of a portion of the alignment control device.

Fig. 3 is a cross-sectional view taken on line III-III of Fig. 2.

Fig. 4a is a cross-sectional view taken on line IV-IV of Fig. 2.

Fig. 4b is an arrow view viewed from V of Fig. 4a.

### DETAILED DESCRIPTION

One embodiment of the present invention will be explained with reference to illustrations of the drawing figures as follows.

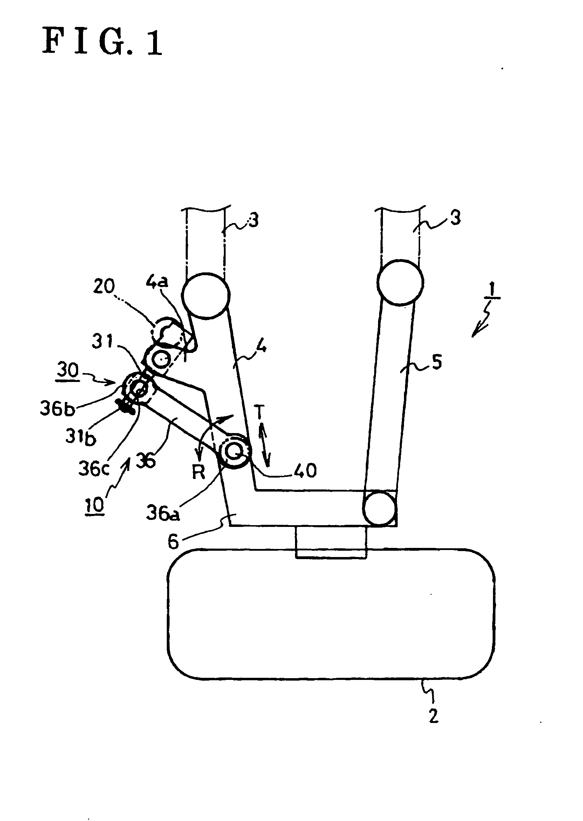

As shown in Fig. 1, an alignment control device 10 (i.e., serving as an alignment control device) is provided at a suspension device 1. Although the suspension device 1 is shown as a suspension positioned at a rear side of the vehicle with the embodiment of the present invention, the suspension may be positioned at a front side. As shown in Fig. 1, the suspension device 1 includes a career 6 (i.e., serving as wheel side member) for rotatably supporting a wheel 2 (i.e., serving as a wheel), a first pair of suspension members 3 (i.e., serving as a vehicle body side member) extended in a width direction of the vehicle for supporting the vehicle body, and a first lower arm 4 (i.e., serving as a connection member) and a second lower arm 5 (i.e., serving as the connection member) for connecting the career 6 and the first suspension member 3. Further, the career 6 is unitarily formed with an extended portion (i.e., serving as the wheel side member) extended upward of the vehicle (i.e., vertically upward direction relative to Fig. 1). An upper arm (i.e., serving as the connection member) for connecting the career 6 and a second suspension member (i.e., serving as the vehicle body side member) is provided at an end portion of the extended portion of the vehicle upward side.

With the suspension device 1, the career 6 and the first lower arm 4, the career 6 and the second lower arm 5, the first suspension member 3 and the first lower arm 4, the first suspension member 3 and the second lower arm 5, the extended portion of the career 6 and the upper arm, and the second suspension member and the upper arm are movably connected respectively.

The alignment control device 10 is positioned at the suspension device 1 in order to affect a connected portion of the career 6 and the first lower arm 4. As shown in Figs. 1-2, the alignment control device 10 includes an electric motor 20 (i.e., serving as an actuator), an operational mechanism 30 (i.e., serving as an operational mechanism), and an eccentric camshaft member 40 (i.e., serving as an eccentric camshaft member). The electric motor 20, the operational mechanism 30, and the eccentric camshaft 40 are independently provided at each wheel 2 positioned at right and left of the vehicle.

The electric motor 20 is electrically connected to an ECU provided at the vehicle and is electrically driven based on a driving signal from the ECU. Because the electric motor 20 is independently provided at the wheels 2 at the right and left of the vehicle, each electric motor 20 at right and left side is driven independently from each other by the ECU. An output shaft side of the electric motor 20 is connected to a housing 50 (i.e., serving as a housing).

The operational mechanism 30 includes a drive shaft 31 (i.e., serving as a drive shaft) and an operational arm 36 (i.e., serving as an operational arm).

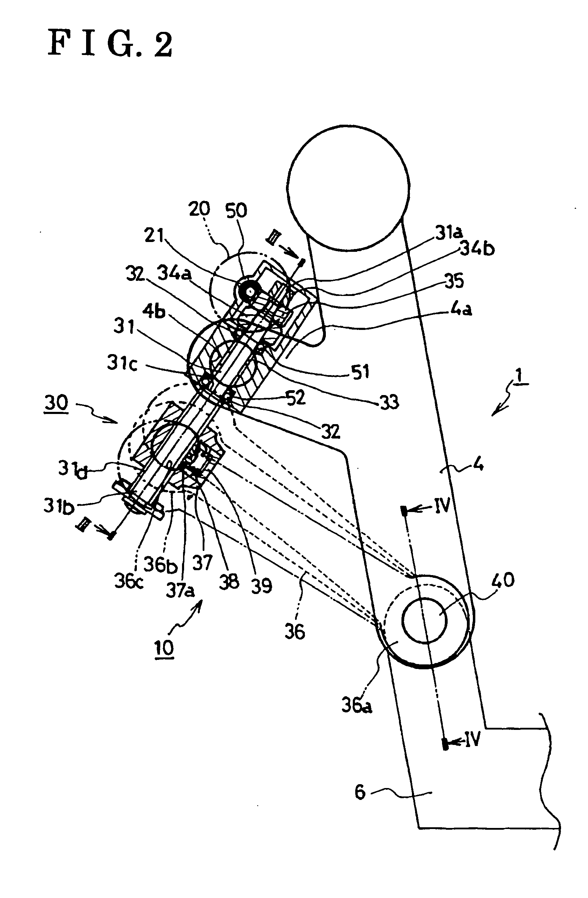

As shown in Fig. 2, the torque from the electric motor 20 is inputted to a first end 31a side of the drive shaft 31. A slider 37 (i.e., serving as a slider) is provided at a second end 31b of the drive shaft 31 and is configured to move in the axial direction of the drive shaft 31. The drive shaft 31 is supported at a housing 50 to be rotatable in the axial peripherally direction between a portion where the torque from the electric motor 20 is inputted and a portion where the slider 37 moves. In other words, the drive shaft 31 is fixed to the housing 50 by screwing a nut 34a for fixing via a thrust bearing 32 and a bearing 33. With the foregoing construction, one of the thrust bearings 32 is sandwiched between the nut 34a for fixing and a stepped portion 51 of the housing 50 in the axial direction. Another thrust bearing 32 is sandwiched between a stepped portion 31c of the drive shaft 31 and a stepped portion 52 of the housing 50 in the axial direction. Accordingly, the drive shaft 31 is supported not to shake relative to the housing 50 in the axial direction.

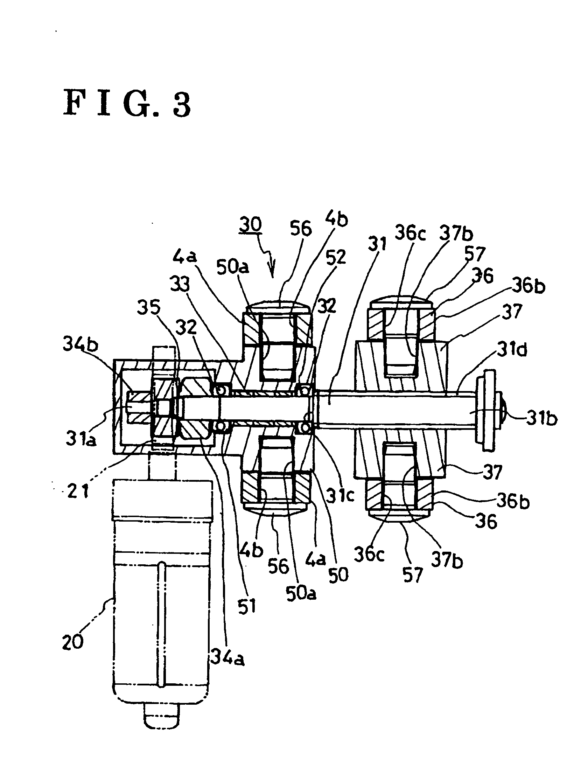

The housing 50 is movably connected relative to the first lower arm 4. As shown in Figs. 1-2, the first lower arm,4 includes a sub-arm 4a branched out from the first lower arm 4. A tip end of the sub-arm 4a includes a forked configuration forked in the vertical direction of Fig. 2 (i.e., top-bottom direction of Fig. 3). The housing 50 is provided between the forked tip ends of the sub-arm 4a. The sub-arm 4a includes a connection bore 4b screwed to a pivot 56. By fitting a thread formed on the pivot 56 and a thread formed on the connection bore 4b, the pivot 56 is fixed to the connection bore 4b of the sub-arm 4a. The tip end side of the pivot 56 slidably contacts a slidably contacting bore 50a of the housing 50. The housing 50 moves relative to the first lower arm 4 (i.e., moving about the pivot 56) by the slidable movement of the pivot 56 and the slidably contacting bore 50a of the housing 50. Thus, the drive shaft 31 moves relative to the first lower arm 4 about the pivot 56.

A wheel gear 35 is connected to the first end 31a side of the drive shat 31 via serration. The wheel gear 35 is geared with a worm gear 21 provided at an output shaft of the electric motor 20. Accordingly, the drive shaft 31 rotates in the axially peripheral direction by the electric motor 20. As shown in Figs. 2-3, the wheel gear 35 is sandwiched between the nut 34a for fixing and a nut 34b for fixing to be fixed relative to the drive shaft 31 in the axial direction without shakiness.

The slider 37 screwed to a feed screw 31d formed on the surface of the drive shaft 31 is provided at the second end 31b of the drive shaft 31. In other words, a trapezoidal screw thread 27a unitarily fixed to the slider 37 is geared with the feed screw 31d so that the slider 37 moves in the axial direction along the axially longitudinal direction of the drive shaft 31 upon the rotation of the drive shaft 31 in the axially peripheral direction. The trapezoidal screw thread 37a of the slider 37 is biased in the direction to be geared with the feed screw 31d by an adjustment screw 38 and a spring 39 provided at the slider 37.

The slider 37 is movably connected to a first end 36b of the operational arm 36. The operational arm 36 includes a forked configuration where the first end 36b side is forked in the vertical direction of Fig. 2 (i.e., top-bottom direction of Fig. 3) likewise the sub-arm 4a. The slider 37 is positioned between the forked portions of the operational arm 36. A connection bore 36c formed on the operational arm 36 is screwed with a pivot 57. By fitting a thread formed on the pivot 57 and a thread formed on the connection bore 36c, the pivot 57 is fixed to the connection bore 36c of the operational arm 36. A tip end side of the pivot 57 is configured to slidably contact with a slidably contacting bore 37b of the slider 37. By the slidable movement between the pivot 57 and the slidably contacting bore 37b of the slider 37, the slider 37 moves relative to the first end 36b of the operational arm 36 (i.e., moves about the pivot 57).

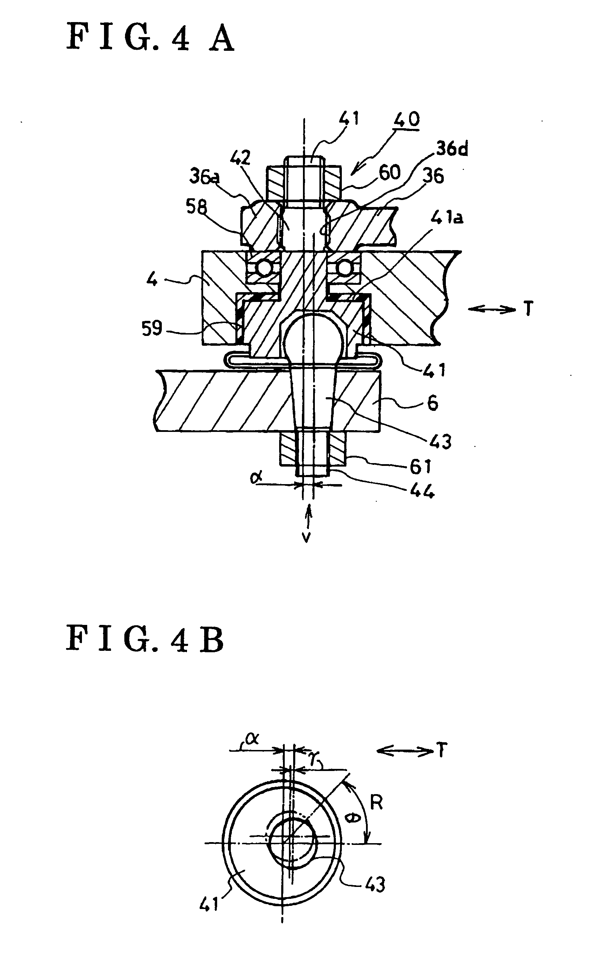

As shown in Fig. 4, a second end 36a of the operational arm 36 is connected to a first shaft 42 (i.e., serving as a second shaft) of the eccentric camshaft 41 of the eccentric camshaft member 40 to be unitarily rotatable. In other words, a connection bore 36d formed on the second end 36a of the operational arm 36 is connected to the first shaft 42 via the serration to be unitarily rotated with the first shaft 42.

In the meantime, the first end 36b of the operational arm 36 is connected to the slider 37 with the foregoing construction. In this case, the first end 36b of the operational arm 36 moves in the axial direction in accordance with the movement of the slider 37 in the axial direction in case the drive shaft 31 rotates in the axially peripheral direction. Accordingly, the operational arm 36 moves about the second end 36a of the operational arm 36.

The construction of the eccentric camshaft member 40 will be explained as follows. The eccentric camshaft member 40 includes an eccentric camshaft 41 and a ball joint 43 as shown in Fig. 4. The eccentric camshaft 41 and the ball joint 43 are connected so that the first shaft 42 and a second shaft 44 (i.e., serving as a first shaft) of the ball joint 43 are configured to be eccentric from each other (i.e., so that the second shaft 44 is offset from the first shaft 42 by α as shown in Fig. 5). The eccentric camshaft member 40 (i.e., the eccentric camshaft 41 and the entire ball joint 43) rotates about the first shaft 42.

The first shaft 42 of the eccentric camshaft 41 is relatively rotatably connected to the first lower arm 4 via a thrust bearing 58, a slidably moving member 59, and a nut 60 for fixing. The eccentric camshaft 41 is relatively rotatable with the first lower arm 4 via the thrust bearing 58 and the slidably moving member 59. The slidably moving member 59 made of resin is configured to slidably contact the eccentric camshaft 41 in the axial direction and the radial direction. In place of the slidably moving member 59, a thrust bearing and a radial bearing, or an angular bearing may be applied. The eccentric camshaft 41 is configured not to shake relative to the first lower arm 4 in the axial direction (i.e., the axial direction of the first shaft 42) by sandwiching the first lower arm 4, the thrust bearing 58, and the operational arm 36 with the stepped portion 41a and the nut 60 for fixing via the slidably moving member 59.

The ball joint 43 is connected to the eccentric camshaft 41 to be moved about a ball 43a. The second shaft 44 of the ball joint 43 is connected to the career 6. The ball joint 43 includes the tapered configuration tapered as being away from the ball 43a. By supporting the career 6 with the tapered surface of the ball joint 43 and the nut 61 for fixing, the ball joint 43 is configured not to shake in the axial direction relative to the career 6 (i.e., the axial direction of the second shaft 44).

The operation of the alignment control device 10 will be explained as follows. For example, in case the side force is generated at the vehicle including the alignment control device 10 by the turning operation, or the like, of the vehicle, a means for detecting the side force sends the detection signal to the ECU. The ECU sends the driving signal to the electric motor 20 based on a predetermined transaction flow as necessary to electrically drive the electric motor 20.

Upon the driving operation of the electric motor 20, the wheel gear 35 and the drive shaft 31 unitarily rotates in the axially peripheral direction due to the geared connection between the worm gear 21 and the wheel gear 35. Thereafter, the slider 37 moves in the axial direction of the drive shaft 31 due to the geared connection between the trapezoidal screw thread 37a of the slider 37 and the feed screw 31d of the drive shaft 31. Accordingly, the operational arm 36 moves about the second end 36a.

In this case, because the first shaft 42 of the eccentric camshaft 41 and the operational arm 36 are connected via the serration, the entire eccentric camshaft member 40 rotates about the first shaft 42 by the movement of the operational arm 36. Thus, the second shaft 44 of the ball joint 43 rotates about the first shaft 42 (i.e., in the direction of an arrow R shown in Fig. 1 and Fig. 4b). When the eccentric camshaft member 40 rotates by θ of Fig. 4b about the first shaft 42, a distance of a predetermined linear direction (i.e., an arrow T direction of Fig. 4b) between the first shaft 42 and the second shaft 44 changes by y of Fig. 4b. As s result, as shown with the arrow T of Fig. 1, the distance between the career 6 and the first lower arm 4 is varied, thus to control the alignment of the wheels 2 of the vehicle (i.e., in the embodiment of the present invention, the toe angle of the wheel 2 is controlled). The driving signal of the electric motor 20 is transmitted from the ECU only when the side force is generated at the vehicle.

With the foregoing construction, it is assumed that the external force is applied to the wheel 2 by the contact of the wheel 2 to an obstacle. For example, in case the external force is applied to the wheel 2 to provide the element in the arrow T direction of Fig. 1, the external force is transmitted to the career 6 to be applied to the portion of the eccentric camshaft member 40 connecting the career 6 and the first lower arm 4. In this case, the element of the external force is applied to vary the distance between the first shaft 42 of the eccentric camshaft 41 and the second shaft 44 of the ball joint 43 in the predetermined linear direction (i.e., direction T of Fig. 1 and Fig. 4).

With the construction of the alignment control device 10, the electric motor 20 is operatively connected to the eccentric camshaft member 40 via the operational mechanism 30 for rotating the first shaft 42. In other words, the eccentric camshaft member 40 for converting the direction of the external force from the direction varying the distance in the predetermined leaner direction (i.e., the direction T of Fig. 1 and Fig. 4) between the first shaft 42 and the second shaft 44 to the direction for rotating the first shaft 42 is provided between the electric motor 20 and the wheel 2. Because the direction of the external force applied to the wheel 2 is unlikely converted to the direction for rotating the first shaft 42 at the eccentric camshaft member 40, the external force is unlikely transmitted to the electric motor 20. Thus, the influence of the external force applied to the wheel 2 to the electric motor 20 is restrained to unlikely damage the electric motor 20 by the external force.

With the alignment control device 10, the housing 50 is movable relative to the sub-arm 4a of the first lower arm 4 and the operational arm 36 and the drive shaft 31 are movable via the slider 37. Accordingly, it is configured that the stress is not applied between the trapezoidal screw 37a and the feed screw 31d serving as the geared mechanism between the slider 37 and the drive shaft 31 upon the rotation of the drive shaft 31. Accordingly, smooth operation of the operational mechanism 30 is achieved.

The alignment control device 10 is independently provided at each wheel 2 at right and left of the vehicle according to the embodiment of the present invention. Accordingly, the vehicle alignment can be controlled in more various manners.

The alignment control device 10 of the embodiment of the present invention includes the electric motor 20 as the actuator. Thus, because the mechanism driven by the hydraulic pressure is not adopted as the actuator, additional construction such as the hydraulic pressure device and the sealing mechanism for the fluid is not required.

Although the eccentric camshaft member 40 includes the eccentric camshaft 41 and the ball joint 43 (i.e., the first shaft 42 and the second shaft 44 are constructed with separate members) with the embodiment of the present invention, the first shaft 42 and the second shaft 44 which are configured to be eccentric from each other may be unitarily formed.

Although the eccentric camshaft member 40 is provided between the first lower arm 4 and the career 6 according to the embodiment of the present invention, the eccentric camshaft member 40 may be provided between the second lower arm 5 and the career 6, the first lower arm 4 and the first suspension member 3, the second lower arm 5 and the first suspension member 3, the career 6 and the upper member, the upper member and the second suspension member, or the like. Thus, although the first shaft 42 is connected to the first lower arm 4 according to the embodiment of the present invention, the first shaft 42 may be connected to the second lower arm 5. Further, the second shaft 44 may be connected to the first suspension member 3 and the first shaft 42 may be connected to the first lower arm 4 or an end portion of the second lower arm 5 at an internal side in the vehicle width direction (i.e., top of Fig. 1). Still further, the second shaft 44 may be connected to the career 6 or the second suspension member and the first shaft 42 may be connected to the upper member. Accordingly, the alignment control device 10 can control the various alignment such as the toe angle of the vehicle, the camber angle, the caster angle, or the like, depending on the construction of the suspension device 1 and the position of the eccentric camshaft member 40.

Although the housing 50 is movably connected to the first lower arm 4 according to the embodiment of the present invention, the housing 50 may be movably connected to the first suspension member 3 and the career 6. Further, although the operational arm 36 is connected to the first shaft 42 to be unitarily rotatable according to the embodiment of the present invention, it may be configured that the eccentric camshaft member 40 rotates about the second shaft 44 so that the operational arm 36 is unitarily rotatably connected to the second shaft 44.

According to the embodiment of the present invention, the alignment control device includes the eccentric camshaft member. The eccentric camshaft member includes the first shaft and the second shaft which are eccentric from each other. The first shaft is connected to the wheel side member and the second shaft is connected to an intermediate member for connecting the wheel side member and the vehicle body side member. In this case, upon the operation of the operational mechanism in accordance with the actuation of the actuator, for example, the first shaft rotated in the axially peripheral direction to operate the eccentric camshaft member, thus to vary the distance between the wheel side member and the intermediate member. Accordingly, the alignment can be controlled by varying the toe angle, the camber angle, and the caster angle, or the like, of the wheel.

In case the external force is applied to the wheel, the external force is transmitted to the wheel side member to be applied to the connection portion (i.e., the eccentric camshaft member) between the wheel side member and the intermediate member. With the construction of the embodiment of the present invention, the actuator is operatively connected to the eccentric camshaft member via the operational mechanisms for rotating the first shaft and the second shaft. In other words, the eccentric camshaft member for converting the external force in the direction for rotating either the first shaft or the second shaft is provided between the actuator and the wheel. Because the external force is unlikely converted into the direction for rotating the first shaft or the second shaft at the eccentric camshaft member, the external force is unlikely transmitted to the actuator. Accordingly, the influence of the external force applied to the wheel to the actuator is restrained, and thus the damage by the external force is unlikely generated.

According to the embodiment of the present invention, the influence of the external force applied to the wheel to the actuator can be restrained with a simple construction including the drive shaft and the operational arm.

According to the embodiment of the present invention, the housing is movable relative to either one of the wheel side member, the vehicle body side member, and the intermediate member. The operational arm and the drive shaft are movable via the slider. Thus, the stress is not applied to the geared mechanism between the slider and the gear of the drive shaft upon the rotation of the drive shaft. Accordingly, the operational mechanism is smoothly operated.

According to the embodiment of the present invention, the toe angle, the camber angle, and the caster angle, or the like, at each wheel at right and left of the vehicle can be changed independently. Thus, the change of the alignment is controlled with further variations.

According to the embodiment of the present invention, because the actuator driven by the hydraulic pressure is not adopted, the parts including the hydraulic pressure device and the sealing are not required, which simplifies the construction of the alignment control device.
An alignment control device includes an actuator, a wheel side member rotatably supporting a wheel, and a vehicle body side member supporting a vehicle body. The alignment control device includes an operational mechanism operated by the actuator and an eccentric camshaft member connecting the operational mechanism relative to a connection member for connecting the vehicle wheel side member and the vehicle body side member.

## Claims

1. An alignment control device comprising:
an actuator (20);
a wheel side member (6) rotatably supporting a wheel;
a vehicle body side member (3) supporting a vehicle body; **characterized in that**
the alignment control device includes
an operational mechanism (30) operated by the actuator; and
an eccentric camshaft member (40) connecting the operational mechanism relative to a connection member (4) for connecting the vehicle wheel side member and the vehicle body side member.

2. An alignment control device according to Claim 1, wherein the operational mechanism comprises
a drive shaft (31) rotated by the actuator; and
an operational arm (36) unitarily rotatably connected to either a first shaft (44) or a second shaft (42) at a first end thereof, connected to the drive shaft at a second end thereof, and moved about the first end upon a rotation of the drive shaft in accordance with movement of the second end in an axial direction of the drive shaft.

3. The alignment control device according to Claim 1, wherein the eccentric camshaft member comprises
a first shaft (44) and a second shaft (42) which are configured to be eccentric from each other; and wherein
the first shaft is connected to either one of the wheel side member or the vehicle body side member and the second shaft is connected to the connection member.

4. The alignment control device according to either one of Claims 1 or 2, further comprising:
a housing (50) movably connected to one of the wheel side member, the vehicle body side member, and the connection member for rotatably supporting the drive shaft; and
a slider (37) movably connected to the second end of the operational arm and screwed with the drive shaft, the slider being configured to move in an axial direction along the drive shaft upon a rotation of the drive shaft.

5. The alignment control device according to Claim 4, wherein the connection member includes a sub-arm (4a) having forked tip ends, and the housing of the actuator is provided inside the sub-arm.

6. The alignment control device according to any one of Claims 1-3, wherein the actuator, the operational mechanism, and the eccentric camshaft member are independently provided at each said wheel provided at right and left of the vehicle.

7. The alignment control device according to any one of Claims 1-4, wherein the actuator includes an electric actuator (20).

8. The alignment control device according to either one of Claims 1 or 4, wherein the drive shaft is movably connected to the second end (36b) of the operational arm.
